# EUROPEAN PATENT APPLICATION

(11) **EP 2 012 426 A2**
(43) Date of publication of application: **07.01.2009**
(21) Application number: 08158805.5
(22) Date of filing: 23.06.2008
(51) Int. Cl.: H02P 29/02, H02H 7/085

(54) **Inverter drive and heat pump water heater**

(30) Priority: 05.07.2007 JP 2007177118
(71) Applicant: Sanden Corporation, Isesaki-shi, Gunma 372-8502 (JP)
(72) Inventor: Ida, Satoshi, Isesaki-shi Gunma 372-8502 (JP); Kobayashi, Kouji, Isesaki-shi Gunma 372-8502 (JP); Kobayashi, Satoshi, Isesaki-shi Gunma 372-8502 (JP); Kado, Hirotaka, Isesaki-shi Gunma 372-8502 (JP)
(74) Representative: Haley, Stephen

(57) **Abstract**

The present invention provides an inverter drive capable of protecting itself in a simple and low-cost manner, and a heat pump water heater including the same.

The inverter drive according to the present invention is an inverter drive (1) designed to be supplied with power from an AC power source (14) and control the frequency of drive current supplied to a motor (22) in accordance with target rotation speed, and comprises a rotation-speed detection means for detecting actual rotation speed (N_{R}) of the motor, and a controller (20) for regulating output duty cycle (D) on the basis of comparison between the actual rotation speed detected by the rotation-speed detection means and the target rotation speed (N_{S}) for the motor, wherein when the actual rotation speed detected is lower than the target rotation speed, the controller obtains a restriction duty cycle (D_{R}) for the target rotation speed, and when the output duty cycle is higher than or equal to the restriction duty cycle, performs a process for reducing load on the motor to an allowable level.

## Description

This invention relates to an inverter drive and a heat pump water heater including the same.

### For example, Japanese Patent Application KOKAI

Publication No. 9-140151 discloses a conventional inverter drive, which includes a current detector for detecting the value of input current supplied from an AC power source to an inverter circuit, and which determines whether or not a motor is overloaded by comparing the input current value detected by the current detector and a standard current value corresponding to a frequency of output current (drive current) supplied to the motor, and regulates the frequency of drive current to protect itself from damage.

The above-mentioned prior technique, however, requires a current detector, which is unfavorable since it results in a complicated and therefore high-cost inverter circuit configuration.

The present invention has been made in light of problems as mentioned above. The primary object of the invention is to provide an inverter drive capable of protecting itself in a simple and low-cost manner, and a heat pump water heater including such inverter drive.

In order to achieve the above object, the present invention provides an inverter drive designed to control the frequency and the pulse width of drive power supplied to a motor, comprising a rotation-speed detection means for detecting actual rotation speed of the motor, and a controller for setting output duty cycle for determining the pulse width to a standard value predetermined for target rotation speed, and regulating the output duty cycle on the basis of comparison between the target rotation speed and the actual rotation speed detected by the rotation-speed detection means, characterized in that when the actual rotation speed detected is lower than the target rotation speed, the controller obtains a restriction duty cycle predetermined for the target rotation speed, and when the output duty cycle is greater than or equal to the restriction duty cycle, performs a process for reducing load on the motor to an allowable level.

In the inverter drive according to the present invention, the controller sets output duty cycle for the drive power to a standard value predetermined for the target rotation speed, and regulates the output duty cycle on the basis of comparison between the target rotation speed and the actual rotation speed detected by the rotation-speed detection means, wherein when the actual rotation speed detected is lower than the target rotation speed, the controller obtains a restriction duty cycle predetermined for the target rotation speed, and when the output duty cycle is greater than or equal to the restriction duty cycle, performs a process for reducing load on the motor to an allowable level. Thus, without a separate overload detection means such as a current detector, the inverter drive can easily detect that the motor is overloaded. Thus, such separate overload detection means can be omitted, and the inverter drive can have a simplified configuration and protect itself in a simple and low-cost manner.

In a preferred aspect of the present invention, the controller has a table including at least restriction duty cycle values associated with a specified number of target rotation speed values, and obtains a restriction duty cycle for the target rotation speed by referring to the table and performing interpolation on the values in the table as necessary.

In the above aspect, the controller is arranged to be able to obtain a restriction duty cycle for the target rotation speed by performing interpolation on the restriction duty cycle values associated with a specified number of target rotation speed values in the table. This allows a reduction in the number of values to be included in the table, therefore a reduction in the amount of memory of the controller to be prepared for the table, and therefore a further reduction in the cost of the inverter drive.

The present invention also provides a heat pump water heater, characterized by including an inverter drive as described above to control the frequency of drive current supplied to a compressor motor.

In the heat pump water heater including an above-described inverter drive to control the frequency of drive current supplied to a compression motor, the condition that a compressor constituting the heat pump water heater is overloaded can be easily detected, which allows the heat pump water heater to be protected from damage in a simple and low-cost manner.

Further scope of applicability of the present invention will become apparent from the detailed description given hereinafter. However, it should be understood that the detailed description and specific examples, while indicating preferred embodiments of the invention, are given by way of illustration only, since various changes and modifications within the sprits and scope of the invention will become apparent to those skilled in the art from this detailed description.

The present invention will become more fully understood from the detailed description given hereinbelow and the accompanying drawings which are given by way of illustration only, and thus, are not limitative of the present invention, and wherein:
FIG. 1 is a block diagram schematically showing an inverter drive which is an embodiment of the present invention,
FIG. 2 is a diagram schematically showing a table stored in an MCU shown in FIG. 1, and
FIG. 3 is a flow chart showing a motor rotation speed control routine executed by the MCU shown in FIG. 1.

Referring to the drawings attached, an embodiment of the present invention will be described.

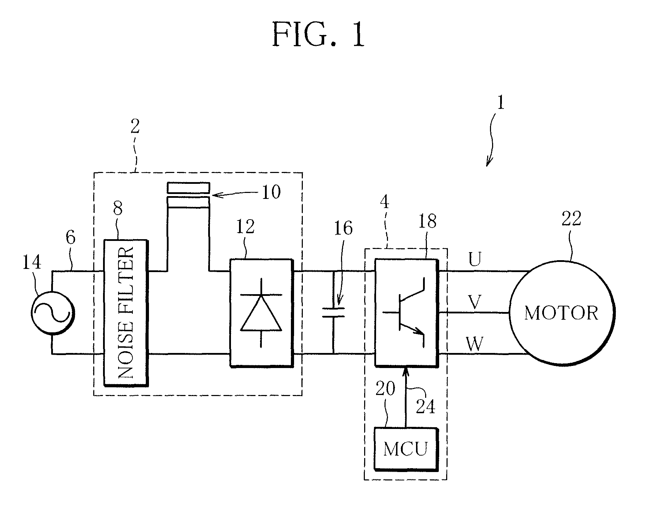

FIG. 1 is a block diagram schematically showing an inverter drive 1 according to the present invention. The inverter drive 1 is incorporated, for example into a heat pump water heater (hereinafter referred to simply as "water heater"), not shown, and consists of an inverter circuit 6 including a rectifier section 2 and an inverter section 4.

The rectifier section 2 includes a noise filter 8, a reactor 10 and a rectifier 12, and is supplied with power from a commercial 200-V two-phase AC power source unit (AC power source) 14. The rectifier section 2 rectifies the supplied AC power to DC power, and supplies the resultant DC power to the inverter section 4. A capacitor 16 is provided between the rectifier section 2 and the inverter section 4.

The inverter section 4 includes an IPM (intelligent power module) 18 and an MCU (main control unit) (controller) 20. The IPM 18 supplies drive power (three-phase, U, V, W) to a compressor motor (motor) 22, while the MCU 20 supplies a PMW (pulse width modulation) control signal 24 to the IPM 18.

The PMW control signal 24 controls the frequency and the pulse width of drive power actually supplied from the IPM 18 to the motor 22, thereby controlling the rotation speed of the motor 22.

Thus, through the motor rotation speed control performed by the MCU 20, the PWM control signal 24 is supplied to the IPM 18, so that drive power with a frequency and a pulse width suitable for a target rotation speed is supplied to the motor 22. In this manner, the compression performance of a compressor (not shown) driven by the motor 22 is varied appropriately, and the flow rate of a refrigerant, such as CO₂, circulating along a refrigerant circuit (not shown) in the water heater is controlled. Thus, the water heater can be driven appropriately, in accordance with load depending on the external environment or the like.

Specifically, when a target rotation speed is set, the MCU 20 controls the frequency of drive power in accordance with the target rotation speed, as mentioned above, and sets the output duty cycle D to a standard value predetermined for the target rotation speed. After this, the MCU 20 regulates the output duty cycle D on the basis of comparison between the actual rotation speed and the target rotation speed, thereby making the actual rotation speed of the motor 22 accord with the target rotation speed even if the actual rotation speed varies due to load on the motor 22.

More specifically, the pulse width per unit time is generally determined by setting a ratio between the pulse on-time and the period of a pulse signal. Thus, Greater output duty cycle D means greater pulse width per unit time of the drive power, which results in an increase in average voltage supplied to the motor 22. Consequently, the motor 22 rotates at an increased rotation speed. It is to be noted that the MCU 20 is supplied with a signal from a sensor (not shown) provided for detecting the actual rotation speed N_{R} of the motor 22.

Further, in the motor rotation speed control of the present embodiment, in order to detect the motor 22 being overloaded, restriction duty cycle values D_{R} are preset in a manner associated with target rotation speed values N_{S}.

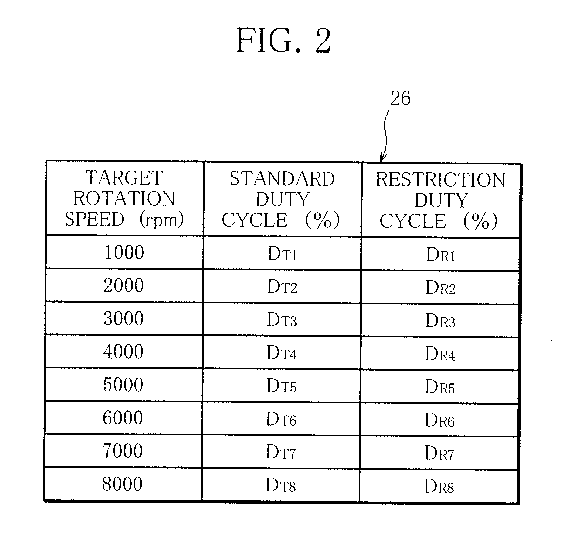

Specifically, FIG. 2 shows a table 26 used in the motor rotation speed control. The table 26 is stored in memory of the MCU 20 in advance, to allow standard duty cycle values D_{T1}%~D_{T8}% and restriction duty cycle values D_{R1}%~D_{R8}% for discrete target rotation speed values Nₛ 1000rpm~8000rpm (with 1000rpm increments in between), for example, to be referred to.

The standard duty cycle values D_{T1}%~D_{T8}% are theoretical output duty cycles D which can drive the motor 22 at the target rotation speeds Ns 1000rpm~8000rpm, respectively, on the condition that the load on the motor 22 is in an allowable range.

The restriction duty cycle values D_{R1}%~D_{R8}% are determined on the basis of the standard duty cycle values D_{T1}%~D_{T8}% for the target rotation speed values 1000rpm~8000rpm, using a predetermined safety factor, respectively. The restriction duty cycle D_{R} is used as an index of the motor 22 being overloaded. Specifically, if, during the control intending to make the actual rotation speed N_{R} accord with the target rotation speed N_{S}, the actual output duty cycle D exceeds the standard duty cycle D_{T} and increases to the restriction duty cycle D_{R} or above, it is determined that the motor 22 is overloaded.

It is to be noted that the standard duty cycle D_{T} and restriction duty cycle D_{R} used in the control are not restricted to the values in the table 26, i.e., the values for the discrete target rotation speed values N_{S} 1000rpm~8000rpm preset with 1000rpm increments in between. Standard duty cycle values D_{T} and restriction duty cycle values D_{R} for target rotation speed values falling between the preset target rotation speed values are obtained by so-called interpolation.

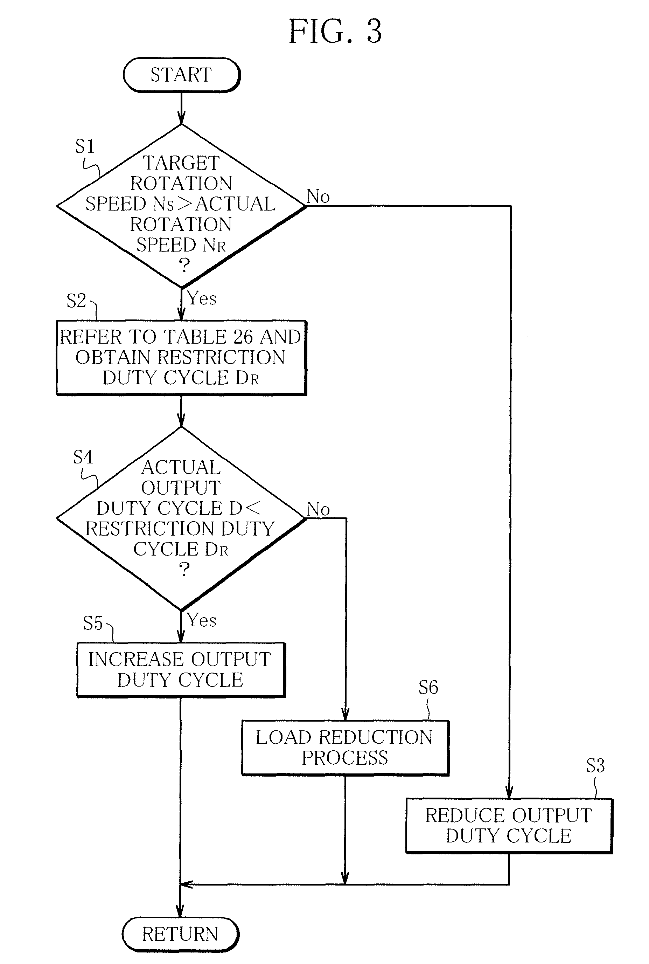

Next, referring to the flow chart shown in FIG. 3, a motor rotation speed control routine which the MCU 20 executes, referring to the table 26 will be described in detail.

The MCU 20 starts the control routine, and first at S1 ("S" stands for "step"; likewise in the following), determines whether or not the actual rotation speed N_{R} is lower than the target rotation speed N_{S}. If the determination is positive (Yes), i.e., it is determined that the actual rotation speed N_{R} is lower than the target rotation speed N_{S}, the MCU 20 goes to S2. If the determination is negative (No), i.e., it is determined that the actual rotation speed N_{R} is higher than or equal to the target rotation speed N_{S}, the MCU 20 goes to S3. It is to be noted that, as mentioned above, when the target rotation speed N_{S} is set, the output duty cycle D is set to an initial value, i.e., a standard duty cycle value D_{T} predetermined for the target rotation speed N_{S}.

When going to S2, the MCU 20 refers to the table 26 and obtains a restriction duty cycle D_{R} for the target rotation cycle N_{S}, and then goes to S4.

When going to S3, the MCU 20 reduces the output duty cycle D (output duty cycle reduction), and returns.

At S4, the MCU 20 determines whether or not the output duty cycle D is less than the restriction duty cycle D_{R}. If the determination is positive (Yes), i.e., it is determined that the output duty cycle D is less than the restriction duty cycle D_{R}, the MCU 20 goes to S5. If the determination is negative (No), i.e., it is determined that the output duty cycle D is greater than or equal to the restriction duty cycle D_{R}, the MCU 20 determines that the motor 22 is overloaded and goes to S6.

When going to S5, the MCU 20 increases the output duty cycle D (output duty cycle increase), and returns.

When going to S6, the MCU 20 performs a process for reducing the load on the motor 22 to an allowable level (load reduction process), and returns.

Thus, unless the motor 22 becomes overloaded, the output duty cycle D is reduced or increased to make the actual rotation speed N_{R} accord with the target rotation speed N_{S}. When the motor 22 becomes overloaded, a process for reducing the load on the motor to an allowable level, such as lowering the target rotation speed N_{S} for the motor 22 or controlling an electronic expansion valve (not shown), is performed.

As understood from the above, in the present embodiment, the motor rotation speed is controlled by controlling the PMW control signal 24 appropriately, specifically by reducing or increasing the output duty cycle D on the basis of comparison between the actual rotation speed N_{R} and the target rotation speed N_{S}.

Further, if the actual rotation speed N_{R} of the motor 22 is lower than the target rotation speed N_{S}, a restriction duty cycle D_{R} for the target rotation speed N_{S} is obtained, and if the output duty cycle D is greater than or equal to the restriction duty cycle D_{R}, a process for reducing the load on the motor 22 to an allowable level is performed. Thus, without incorporating a separate overload detection means, such as a current detector, into the inverter circuit 6, the motor 22 being overloaded can be detected easily. Thus, such separate overload detection means can be omitted, and the inverter circuit 6 can have a simplified circuit configuration and protect itself 6 and the motor 22 in a simple and low-cost manner.

Further, it is arranged such that the standard duty cycle D_{T} and/or the restriction duty cycle D_{R} can be obtained by performing interpolation on the preset values in the table 26, i.e., the standard duty cycle values D_{T1}%~D_{T8}% and restriction duty cycle values D_{R1}%~D_{R8}% associated with a specified number of target rotation speed values N_{S}. This allows a reduction in the number of values to be included in the table 26, therefore a reduction in the amount of memory of the MCU 20 to be prepared for the table 26, and therefore a further reduction in the cost of the inverter drive 1.

In the above, an embodiment of the present invention has been described. The present invention is, however, not limited to the described embodiment but can be modified in various ways without departing from the sprit and scope of the present invention.

For example, in the described embodiment, the inverter drive 1 is applied to a heat pump water heater, where the inverter drive 1 can easily detect the condition that a compressor constituting the heat pump water heater is overloaded, and therefore, protect the heat pump water heater in a simple and low-cost manner. The application of the inverter drive 1 is, however, not limited to this. The similar effect can be obtained when the inverter drive 1 is applied to refrigeration air conditioners and the like, for example.

## Claims

1. An inverter drive designed to be supplied with power from an AC power source and control the frequency of drive current supplied to a motor in accordance with target rotation speed for the motor, comprising:
a rotation-speed detection means for detecting actual rotation speed of the motor, and
a controller for setting output duty cycle to a standard value predetermined for the target rotation speed, and regulating the output duty cycle on the basis of comparison between the target rotation speed and the actual rotation speed detected by the rotation-speed detection means, **characterized in that**
when the actual rotation speed detected is lower than the target rotation speed, the controller obtains a restriction duty cycle predetermined for the target rotation speed, and when the output duty cycle is greater than or equal to the restriction duty cycle, performs a process for reducing load on the motor to an allowable level.

2. The inverter drive according to claim 1, **characterized in that**
the controller has a table including at least restriction duty cycle values associated with a specified number of target rotation speed values, and obtain a restriction duty cycle for the target rotation speed by referring to the table and performing interpolation on the values in the table as necessary.

3. A heat pump water heater, **characterized by** including an inverter drive according to claim 1 or 2 to control the frequency of drive current supplied to a compression motor.
